# EUROPÄISCHE PATENTSCHRIFT

(11) **EP 2 909 670 B1**
(45) Veröffentlichungstag und Bekanntmachung des Hinweises auf die Patenterteilung: **19.08.2020**
(21) Anmeldenummer: 13783301.8
(22) Anmeldetag: 22.10.2013
(51) Int. Cl.: G02B 21/08, G02B 21/18, F21Y 103/00, F21Y 105/00, F21Y 115/15, F21Y 115/20

(54) **BELEUCHTUNGSEINRICHTUNG**
ILLUMINATION DEVICE
DISPOSITIF D'ÉCLAIRAGE

(30) Priorität: 22.10.2012 DE 102012219237; 22.10.2012 DE 102012219239
(43) Veröffentlichungstag der Anmeldung: 26.08.2015
(73) Patentinhaber: Leica Microsystems CMS GmbH, 35578 Wetzlar (DE)
(72) Erfinder: SCHUMANN, Christian, 35392 Gießen (DE); KRÜGER, Ralf, 35510 Butzbach Griedel (DE); BAUER, Tobias, 61462 Königstein (DE); MÜLLER-RENTZ, Arnold, 65611 Brechen (DE); HERMANNS, Klaus, 35641 Aßlar (DE); SCHULZ, Christian, 35606 Solms (DE)
(74) Vertreter: Bradl, Joachim
(86) Internationale Anmeldenummer: PCT/EP2013/072073
(87) Internationale Veröffentlichungsnummer: WO 2014/064106

(56) Entgegenhaltungen:
- EP-A1- 1 416 308
- WO-A1-2010/052174
- DE-A1- 3 734 691
- DE-A1- 19 845 603
- DE-A1-102005 036 397
- JP-A- 2001 338 502
- JP-A- 2005 245 539
- US-A1- 2007 211 460
- US-A1- 2007 297 049
- US-A1- 2009 109 525

## Beschreibung

Die vorliegende Erfindung betrifft eine Beleuchtungseinrichtung eines optischen Geräts nach dem Oberbegriff des Patentanspruchs 1.

Bei optischen Geräten, wie z. B. Lichtmikroskopen oder -makroskopen, in denen ein zu untersuchendes Objekt durch eine Lichtquelle beleuchtet wird, ist es in der Regel wünschenswert, wenn die Helligkeit der Lichtquelle veränderbar ist, um die Beleuchtungsverhältnisse optimal an die Art des zu untersuchenden Objekts und an das verwendete Beobachtungsverfahren (beispielsweise Hellfeld, Polarisation, Interferenzkontrast oder Phasenkontrast) anpassen zu können. Als Lichtquellen kommen hierbei bevorzugt Glühlampen bzw. Halogenlampen zum Einsatz, da diese von zahlreichen Herstellern in verschiedensten Ausgestaltungen hinsichtlich Leistung, Betriebsspannung, Wendelform, Lebensdauer und Farbtemperatur erhältlich sind.

So offenbart die US 2007/0211460 A1 eine Multicolor-LED-Lichtquelle für Durchlichtbeleuchtung in einem Mikroskop, die anstelle des Kondensors in das Mikroskop eingesetzt wird und in kostengünstiger Weise die klassische WeißLichtquelle ersetzt und alleine zum Einsatz kommt.

Die JP 2001-338502 A beschreibt eine Beleuchtungseinrichtung für ein Mikroskop mit zwei hintereinander im Beleuchtungsstrahlengang anordneten Gasentladungs-Lichtquellen, deren abgestrahltes Licht durch die Beleuchtungsoptik überlagert wird. Bei gleichen Lichtquellen kann die Lichtausbeute erhöht werden, bei Lichtquellen mit unterschiedlichen Spektren kann das zur Verfügung gestellte Spektrum bzw. die Anzahl der zur Verfügung stehenden Emissionslinien, erhöht werden.

In der US 2009/0109525 A1 wird ein Durchlichtmikroskop mit Durchlichtbeleuchtungsquelle beschrieben. Es wird eine zweite Lichtquelle mit blauer LED mit antimykotischer Wirkung angegeben, die bei ausgeschalteter Beobachtung unterhalb des Tisches oder im Okular eingesetzt wird und die Probe gegen Pilzbefall behandelt.

Die DE 198 45 603 A1 beschreibt eine Beleuchtungseinrichtung für ein Mikroskop, die auf eine geringe Wärmeentwicklung gerichtet ist. Der Beleuchtungsstrahlengang geht von einer ersten LED aus. Eine nachfolgende, zweite LED ist auf der optischen Achse in einer zentralen Bohrung einer Beleuchtungslinse montiert und schattiert dort die Beleuchtung der ersten LED etwas ab. Sie strahlt ebenfalls in den Beleuchtungsstrahlengang ab.

Die WO 2010/052174 A1 beschreibt eine semi-transparente Beleuchtungsvorrichtung mit einer Leuchtschicht und einer zwischen der Rückseite der Beleuchtungsvorrichtung und der Leuchtschicht angeordneten untransparenten Abschirmschicht mit einem Löcher-Array. Durch Anschalten gezielter Bereiche der Leuchtschicht wird Licht durch einzelne Löcher abgestrahlt. Es wird eine Anwendung für Displays angegeben.

Die JP 2005-245539 A offenbart eine Beleuchtungsanordnung für eine Spaltlampe, die zur Untersuchung des Augenhintergrundes eines Patientenauges dient. Die Lichtquelle ist aus zwei Arrays von LEDs aufgenaut, die in Richtung der optischen Achse in unterschiedlichen Ebenen angeordnet sind. Die einzelnen LEDs sind dabei so versetzt angeordnet, dass sie sich gegenseitig nicht überlagern und jede LED frei abstrahlen kann. Die Summe des abgestrahlten Licht aller LEDs wird über einen Reflektor zum Beleuchtungslicht zusammengeführt. Eine Verwendbarkeit der Lichtquelle an einem Mikroskop wird lediglich erwähnt.

Die DE 10 2005 036 397 A1 offenbart eine sehr kompakte Lichtquelle aus einer oder mehreren organischen lichtemittierenden Dioden (OLED), die anstelle der üblichen Mikroskop-Lichtquelle in einem Kompakt-Mikroskop eingesetzt wird und somit alleine zum Einsatz kommt.

Andererseits ist zur routinemäßigen Bewertung von Mikroskopaufnahmen bei hohem Durchsatz ein definierter und einheitlicher Farbeindruck von entscheidender Bedeutung. Beispielsweise in der Pathologie basiert die Diagnose zu einem entscheidenden Anteil auf dem Farbeindruck mikroskopischer Aufnahmen von Gewebeschnitten. In der Vergleichsmikroskopie und -makroskopie ist eine farblich gleiche Darstellung unerlässlich, um den Vergleichszweck zuverlässig zu erfüllen.

Zur Änderung bzw. Einstellung des Farbeindrucks in die Mikroskopie existieren verschiedene Verfahren. Zum einen kann beispielsweise bei Beobachtung durch Okulare und der Verwendung von Bogenlampen zur Beleuchtung der aufgebrachte Lampenstrom erhöht werden, um die Farbtemperatur zu verändern. Dies ist jedoch insofern nachteilig, als die Lebensdauer der Lampe sinkt. Eine hiermit einhergehende Erhöhung der Helligkeit, welche für bestimmte Anwendungen gewünscht sein kann, muss für andere Anwendungen, bei denen der Farbeindruck eines Objekts verändert werden soll, gegebenenfalls wieder kompensiert werden, beispielsweise mittels Neutraldichtefiltern.

Weiterhin ist die spektrale Emission an physikalische Gesetze (Planck'sches Strahlungsgesetz) gebunden, so dass die spektrale Verteilung der Intensität nur innerhalb bestimmter Grenzen veränderbar ist. Auch ist eine Erhöhung des Lampenstroms wenig energieeffizient.

Bei Verwendung einer Kameraaufnahme ist es möglich, an der Kamera einen Weißabgleich durchzuführen. Kameras, die bei der Hochdurchsatzanalyse von pathologischen Proben konkurrenzfähig zum menschlichen Auge bzgl. der Empfindlichkeit sind, sind jedoch teuer. Des Weiteren ist eine Kameraaufnahme und eine anschließende Begutachtung durchzuführen, was den Arbeitsablauf entscheidend verlangsamen kann.

Sowohl zur Bereitstellung einer farbneutralen Beleuchtung bei unterschiedlichen Helligkeiten, als auch zur Änderung des Farbeindrucks ist es bekannt, variable farbliche Filter in den Beleuchtungsstrahlengang einzubringen. Eine derartige Lösung wird beispielsweise in der DE 101 32 360 C1 vorgeschlagen. Die Bereitstellung derartiger Filter erweist sich jedoch als teuer in der Herstellung, sowie relativ grob bei der Einstellung einer gewünschten farbneutralen Helligkeitseinstellung bzw. einer gewünschten Änderung des Farbeindrucks.

Es ist auch bekannt, im Abbildungsstrahlengang besondere Prismenanordnungen zu verwenden, wobei auch diese Vorgehensweise als aufwendig und teuer zu betrachten ist. In der Vergleichsmikroskopie und -makroskopie werden im Beleuchtungsstrahlengang teilweise Bifurkal-Glasfasern genutzt, um das Licht einer Beleuchtungsquelle zur Beleuchtung beider Beobachtungsobjekte zu nutzen. Derartige Bifurkal-Glasfasern sind allerdings aufwendig in der Herstellung und entsprechend teuer.

Bei der Beleuchtung mikroskopischer Proben und derer Abbildung mit Objektiven niedriger Vergrößerung und großem Sehfeld ergibt sich ferner oftmals das Problem, dass die Ausleuchtung der Probe nicht homogen bzw. konstant ist, insbesondere zum Sehfeldrand hin abnimmt, wodurch der optische Eindruck insgesamt inhomogen ist. Im Falle einer abnehmenden Beleuchtungsstärke zum Sehfeldrand hin ergibt sich am Sehfeldrand beispielsweise ein entsprechend dunklerer optischer Eindruck. Dies liegt begründet in der Abstrahlcharakteristik herkömmlich verfügbarer Lichtquellen. Als Lichtquellen kommen hierbei bevorzugt wiederum die oben erwähnten Glühlampen bzw. Halogenlampen zum Einsatz.

Die verfügbaren Konzepte zur Korrektur inhomogener Ausleuchtung des Sehfeldes beschränken sich herkömmlicherweise auf Neutraldichtefilter, die in den jeweiligen Beleuchtungsstrahlen eingebracht werden. Als nachteilig bei derartigen Neutraldichtefiltern wird angesehen, dass diese bezüglich der Verteilung der optischen Dicke über das Sehfeld nicht veränderlich sind. Eine flexible Anpassung an unterschiedliche inhomogene Ausleuchtungen ist mit einem Neutraldichtefilter also in der Regel nicht möglich. Ferner erweist sich als nachteilig, dass die volle Leuchtstärke der Lichtquelle nicht genutzt werden kann, da zur Homogenisierung ein Teil des Lichts reflektiert oder absorbiert werden muss. Ein so ausgebildeter radialer Homogenisierungsfilter ist beispielsweise aus der WO 0005606 bekannt.

Zur Anpassung der Beleuchtung an unterschiedliche Objektive ist es üblich, insbesondere bei Verwendung von Objektiven mit großem Sehfeld, konstruktiv eine zweite Beleuchtungsoptik für niedrigere Vergrößerungen, sowie einen Wechselmechanismus bereitzustellen.

Insbesondere bei Auflichtbeleuchtungen erweist sich dieser Sachverhalt als nachteilig, da hier das Objektiv eine Komponente der Beleuchtungsoptik darstellt. Bei Bereitstellung mehrerer Objektive, beispielsweise auf einem Objektivrevolver, ist somit für jedes Objektiv ein Neutraldichtefilter sowie ein Wechselmechanismus, der zum Objektivrevolver synchronisiert sein muss, vorzusehen. Derartige Lösungen sind unflexibel und erfordern einen großen konstruktiven Aufwand. Derartige Lösungen sind ferner nicht für sämtliche relevanten Parameter vorhaltbar, wobei hier beispielsweise Wechsel des Objektivs, Wechsel der numerischen Apertur, Konstrastverfahren, oder auch Zentrierung und Fokussierung innerhalb der Beleuchtung, z. B. Einstellung, Zentrierung und Fokussierung der Leuchtfeldblende, genannt seien.

Es ist ferner bekannt, bei Verwendung von digitalen Bildaufnahmen mittels einer Kamera eine nachträgliche digitale Ausleuchtungskorrektur, eine sogenannte Shading-Korrektur vorzunehmen. Der Kontrast einer Kameraaufnahme wird jedoch über die Beleuchtungsstärke und über den fest vorgegebenen Dynamikbereich der Kamera bestimmt. So ist es bei vielfachen Anwendungen nicht möglich, einen durch schlechte bzw. inhomogene Ausleuchtung bedingten Kontrastverlust mittels einer Shading-Korrektur auszugleichen. Eine derartige Shading-Korrektur ist ferner, wie bereits erwähnt, lediglich bei Verwendung einer digitalen Kamera einsetzbar. Bei direkter Beobachtung eines Objektes durch ein Okular steht dieses Verfahren nicht zur Verfügung.

Aufgabe der Erfindung ist die Bereitstellung einer flexibel einstellbaren Beleuchtungseinrichtung für optische Geräte, mit der, je nach Anforderungen, eine Änderung eines Farbeindrucks oder auch eine farbneutrale Helligkeitseinstellung und / oder eine homogene Ausleuchtung eines Sehfeldes in einfacher Weise möglich ist.

Diese Aufgabe wird gelöst durch eine Beleuchtungseinrichtung mit den Merkmalen des Patentanspruchs 1 sowie ein mit einer derartigen Einrichtung ausgebildetes Mikroskop oder Makroskop mit den Merkmalen des Patentanspruchs 7.

Mit der Erfindung ist eine sehr energieeffiziente und kostengünstige Möglichkeit zur farblichen Steuerung und / oder Helligkeitssteuerung von Beleuchtungslicht zur Verfügung gestellt. Insbesondere auf variable farbliche Filter, welche sowohl teuer in der Bereitstellung als auch aufgrund von Absorptionseigenschaften wenig energieeffizient sind, kann verzichtet werden. Erfindungsgemäß lässt sich Beleuchtungslicht sehr z.B. genau auf einen "gewünschten" Farbeindruck bzw. ein gewünschtes Frequenzspektrum einstellen. Auch eine Homogenisierung eines Beleuchtungsfeldes ist in einfacher Weise bereitstellbar.

Vorteilhafte Ausgestaltungen der Erfindung sind Gegenstand der Unteransprüche.

Besonders bevorzugt ist die Ausbildung der zweiten Beleuchtungsquelle als selbstleuchtende Schicht.

Gemäß einer ersten bevorzugten Ausführungsform ist die wenigstens eine in dem Beleuchtungsstrahlengang positionierbare transparente bzw. semitransparente selbstleuchtende Schicht als Elektrolumineszenzschicht ausgebildet. Als Beispiele für derartige Elektrolumineszenzschichten seien erwähnt Leuchtdioden und Elektrolumineszenz-Folien.

Besonders bevorzugt ist, dass die selbstleuchtende Schicht als OLED oder als TOLED ausgebildet ist. Als OLEDs oder organische Leuchtdioden werden leuchtende Dünnschichtbauelemente aus organischen halbleitenden Materialien bezeichnet. Sie unterscheiden sich von anorganischen Leuchtdioden (LEDs) in der praktischen Anwendung dadurch, dass ihre Stromdichte und Leuchtdichte geringer sind. Ferner sind keine einkristallinen Werkstoffe nötig. OLEDs bestehen aus einer organischen Schichtfolge, deren Dicke insgesamt etwa 200 nm betragen kann. Diese Schichtfolge wird zwischen eine Anode und eine Kathode eingebracht. Üblicherweise wird als Substrat Glas verwendet, auf das eine transparente leitende Schicht, z.B. Indiumzinnoxid (ITO) als Kathode aufgebracht wird. Darauf folgt die organische Schichtfolge, und anschließend eine z.B. metallische Kathode. Ist auch die Kathode bzw. eine eingesetzte Treiberelektrode transparent ausgebildet, spricht man von transparenten OLEDs oder kurz TOLEDs. Die Aufbringung der organischen Materialien erfolgt entweder durch Aufdampfen bei 300° - 400°, oder in flüssiger Form. OLED- oder TOLED-Schichten können in einfacher Weise übereinander bzw. hintereinander liegend angeordnet werden, so dass beispielsweise bei einer Verwendung von OLEDs oder TOLEDs mit unterschiedlichen Frequenzspektren farbige Komponenten, entsprechend dem Frequenzspektrum einer jeweiligen OLED, in gewünschter Weise dem Beleuchtungslicht einer herkömmlichen Lichtquelle beigemischt werden können. Z.B. können drei übereinander angeordnete OLEDs oder TOLEDs verwendet werden, welche zusammen einen geeigneten Farbraum, z.B. einen RGB-Farbraum, aufspannen bzw. parametrisieren.

Es ist ferner bevorzugt, dass die wenigstens eine zweite Beleuchtungsquelle bzw. selbstleuchtende Schicht in der Aperturebene des Beleuchtungsstrahlengangs oder in der Nähe der Aperturebene oder in einer Zwischenbildebene oder in der Nähe der Zwischenbildebene ausgebildet ist. Mit dieser Maßnahme kann eine homogene Farbkorrektur über das ganze Sehfeld insbesondere effektiver Weise zur Verfügung gestellt werden.

Die Transparenz (oder Semitransparenz) der Anordnung gewährleistet ferner eine vollständige oder weitgehende Transmission des Beleuchtungslichts der ersten Lichtquelle bzw. Hauptlichtquelle. Aufgrund der geringen Schärfentiefe von Mikroskopbeleuchtungssystemen in der Zwischenbildebene ist die Ausführung einer selbstleuchtenden Schicht durch Übereinanderanordnung von farblich unterschiedlichen Emittern, insbesondere entsprechenden OLED- oder TOLED-Schichten, in einfacher Weise möglich.

Es ist besonders bevorzugt, dass die wenigstens eine selbstleuchtende Schicht in einer Zwischenbildebene eines Köhler'sehen Beleuchtungsstrahlengangs oder in der Nähe eines derartigen Zwischenbildes ausgebildet ist.

Durch die Anordnung der wenigstens einen selbstleuchtenden Schicht in der Zwischenbildebene wird erreicht, dass die Leuchtstruktur der selbstleuchtenden Fläche auf die Objektfläche bzw. Probenfläche abgebildet wird

Es sei jedoch darauf hingewiesen, dass eine Anordnung der wenigstens einen zweiten Beleuchtungsquelle bzw. selbstleuchtenden Schicht auch an anderen Positionen bzw. Ebenen des Beleuchtungsstrahlengangs möglich ist.

Gemäß einer weiteren bevorzugten Ausgestaltung ist die wenigstens eine selbstleuchtende Schicht als ebene oder gekrümmte Oberfläche ausgebildet, wobei die Schicht insbesondere auf die Oberfläche eines im Beleuchtungsstrahlengang vorgesehenen optischen Elements, beispielsweise eine Linse oder einen gekrümmten Spiegel, aufgebracht sein kann.

Durch die erfindungsgemäß vorgesehene Beleuchtung einer Objektebene bzw. eines Objektes mit zwei Beleuchtungsquellen von denen die zweite transparent bzw. semitransparent für das Licht der ersten Beleuchtungsquelle ist, ist in besonders einfacher und effektiver Weise eine gewünschte Manipulation bzw. Anpassung des Beleuchtungslichtes für ein zu beobachtendes Objekt bereitstellbar. Insbesondere kann eine inhomogene Beleuchtung durch eine erste Lichtquelle in wirksamer Weise durch entsprechende Ansteuerung der zweiten Lichtquelle kompensiert werden. Auch kann mittels der zweiten Lichtquelle z.B. die Farbtemperatur des Beleuchtungslichtes insgesamt eingestellt werden.

Durch die bevorzugte Verwendung von bereichsweise oder einzeln ansteuerbaren Bereichen der selbstleuchtenden transparenten bzw. semitransparenten Schicht bzw. Schichten (d. h. Schichten mit einer Anzahl einzeln ansteuerbarer Bereiche, also wenigstens zweier einzeln ansteuerbarer Bereiche) ist eine sehr energieeffiziente und kostengünstige Möglichkeit zur flächig strukturierten, variablen Steuerung von Beleuchtungslicht zur Verfügung gestellt. Hiermit ist in einfacher Weise eine positionsabhängige Beleuchtungskorrektur eines Sehfeldes bereitstellbar. Insbesondere auf Neutraldichtefilter, welche sowohl teuer in der Bereitstellung als auch aufgrund von Absorptionseigenschaften wenig energieeffizient sind, kann verzichtet werden. Somit lässt sich ein sehr homogenes Sehfeld für unterschiedliche Mikroskop- bzw. Makroskopeinstellungen bereitstellen.

Zweckmäßigerweise weist die erfindungsgemäße Vorrichtung Mittel zur individuellen elektrischen Ansteuerung der einzelnen Bereiche der wenigstens einen selbstleuchtenden Schicht auf. Bei Vorsehen mehrerer Schichten und entsprechender individueller elektrischer Ansteuerung der einzelnen Schichten ist es möglich, die Intensität der beigemischten Farbkomponenten durch entsprechende Dosierung der elektrischen Ansteuerung zu verändern und somit den Farbeindruck des Beleuchtungslichts einzustellen.

Beispielsweise ist es möglich, die jeweiligen selbstleuchtenden Schichten räumlich bzw. flächig strukturiert auszubilden und eine selektive elektrische Ansteuerung der einzelnen Bereiche bereitzustellen. Mit einer derartigen selektiven Ansteuerung können einzelne Bereiche der Fläche unterschiedlich stark leuchtend bereitgestellt werden. Dies wird insbesondere durch geeignete Kontaktierungsvorrichtungen und eine entsprechende Ansteuerelektronik (Steuergerät) erreicht. Mittels einer derart flexiblen Ansteuerung kann dem Beleuchtungslicht beispielsweise einer herkömmlichen Lichtquelle, zum Beispiel LED oder Glühwendel, selektiv in positionsabhängiger Strukturierung und Helligkeit weiteres Licht zugemischt werden.

Bei Vorsehen mehrerer selbstleuchtender Schichten mit unterschiedlichen Frequenzspektren und entsprechender individueller elektrischer Ansteuerung der einzelnen Schichten ist es ferner möglich, die Intensität der beigemischten Farbkomponenten durch entsprechende Dosierung der elektrischen Ansteuerung zu verändern und somit den Farbeindruck des Beleuchtungslichts einzustellen, insbesondere für verschiedene Intensitäten konstant zu halten.

Die räumliche Strukturierung kann insbesondere eine Rotationssymmetrie um die optische Achse der Beleuchtungsoptik aufweisen. Sie kann aber auch beispielsweise aus einzelnen rechteckigen Pixeln oder segmentierten Bereichen, insbesondere Vierecken, Rechtecken, Quadraten oder Kreisen, bestehen.

Gemäß einer bevorzugten Ausführungsform des erfindungsgemäßen Mikroskops oder Makroskops ist dieses als Vergleichsmikroskop bzw. -makroskop mit wenigstens zwei Teilmikroskopen bzw. Bildkanälen ausgebildet, wobei wenigstens ein Teilmikroskop bzw. Bildkanal oder sämtliche Teilmikroskope bzw. Bildkanäle mit einer erfindungsgemäßen Beleuchtungseinrichtung, insbesondere zur farblichen Steuerung oder Helligkeitssteuerung von Beleuchtungslicht, ausgebildet ist bzw. sind. Derartige Vergleichsmikroskope oder -makroskope finden beispielsweise in der Forensik Anwendung. Mit der vorliegenden Erfindung können z.B. Fertigungsstreuungen, welche bei nominell gleichen Lichtquellen auftreten, in einfacher Weise und ohne Intensitätsverlust ausgeglichen werden.

Die Erfindung wird im Folgenden mit Bezug auf die beigefügte Zeichnung anhand bevorzugter Ausführungsbeispiele weiter erläutert.

Es zeigt
- Figur 1: eine schematische seitliche Darstellung einer ersten bevorzugten Ausführungsform einer erfindungsgemäßen Beleuchtungseinrichtung,
- Figur 2: eine schematische Ansicht einer ersten bevorzugten Ausführungsform eines mit einer erfindungsgemäßen Beleuchtungseinrichtung ausgebildeten Mikroskops
- Figur 3: eine schematische Ansicht einer ersten bevorzugten Ausführungsform eines mit einer erfindungsgemäßen Beleuchtungseinrichtung ausgebildeten Vergleichsmikroskops
- Figur 4: eine schematische Ansicht einer zweiten bevorzugten Ausführungsform eines mit einer erfindungsgemäßen Beleuchtungseinrichtung ausgebildeten Mikroskops, und
- Figur 5: eine schematische Ansicht einer zweiten bevorzugten Ausführungsform eines mit einer erfindungsgemäßen Beleuchtungseinrichtung ausgebildeten Vergleichsmikroskops
- Figur 6: eine schematische seitliche Darstellung einer zweiten bevorzugten Ausführungsform einer erfindungsgemäßen Beleuchtungseinrichtung,
- Figur 7: eine schematische Ansicht einer weiteren bevorzugten Ausführungsform eines mit der zweiten erfindungsgemäßen Beleuchtungseinrichtung ausgebildeten Mikroskops
- Figur 8: eine schematische Ansicht einer weiteren bevorzugten Ausführungsform eines mit der zweiten erfindungsgemäßen Beleuchtungseinrichtung ausgebildeten Mikroskops, und
- Figur 9: verschiedene Beispiele möglicher Strukturierungen der erfindungsgemäß eingesetzten transparenten oder semitransparenten selbstleuchtenden Schichten.

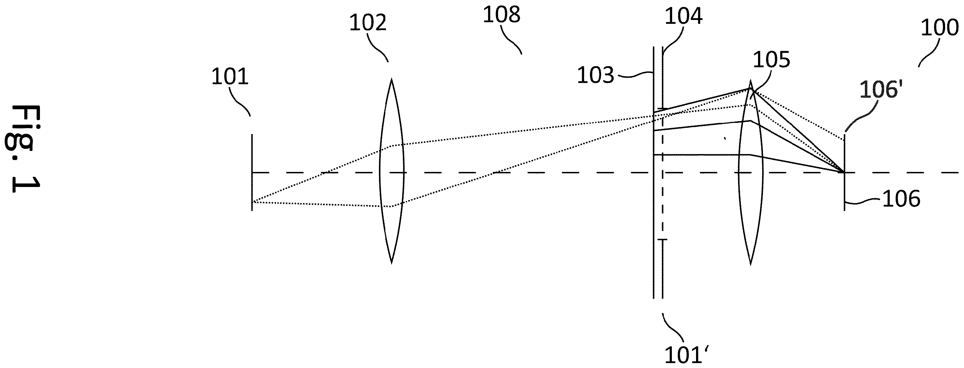

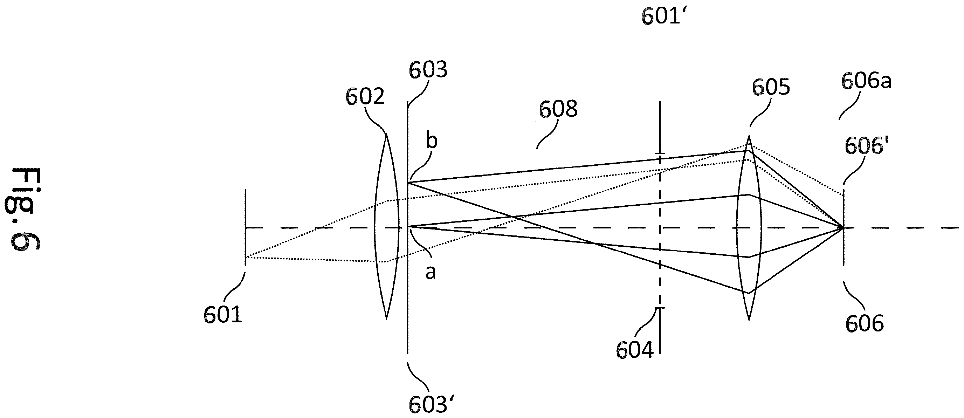

Die Figuren 1 bis 5 zeigen eine bevorzugte Ausführungsform der Erfindung, zum Farbtemperaturausgleich eingerichtet ist. Die Figuren 6 bis 10 zeigen eine bevorzugte Ausführungsform der Erfindung die insbesondere zum Homogenitätsausgleich eingestellt ist.

Die in Figur 1 dargestellte bevorzugte Ausführungsform einer Beleuchtungseinrichtung mit einer Vorrichtung zur farblichen Steuerung von Beleuchtungslicht ist insgesamt mit 100 bezeichnet und dient zur Beleuchtung eines in einer Objektebene 106' positionierten Objektes 106. Die Beleuchtungseinrichtung kann beispielsweise für ein (in Figur 1 nicht dargestelltes) Mikroskop oder Makroskop ausgebildet sein.

Die Beleuchtungseinrichtung 100 weist eine Lichtquelle 101, beispielsweise in Form einer Glühlampe oder LED, auf, deren Licht über ein System von Linsen 102, 105 entlang eines Beleuchtungsstrahlengangs 108 zur Beleuchtung des zu untersuchenden Objekts 106 geführt ist.

Die Linse 102 ist als Kollektorlinse, und die Linse 105 als Kondensorlinse ausgebildet. Selbstverständlich ist es möglich, an den Positionen dieser Linsen jeweils mehrere Linsen umfassende Kollektor- bzw. Kondensoroptiken vorzusehen. In einer zur Ebene der Lichtquelle 101 konjugierten Ebene 101 ist eine Aperturblende 104 ausgebildet, mittels der die Beleuchtungslichtintensität regelbar ist.

In dieser konjugierten Ebene 101' (Aperturebene) oder nahe dieser Ebene ist wenigstens eine semitransparente, selbstleuchtende Schicht 103, welche bevorzugt als OLED ausgebildet ist, in den Beleuchtungsstrahlengang 108 eingebracht.

Mittels Steuerung bzw. Einstellung der Intensität und/oder des Frequenzspektrums dieser wenigstens selbstleuchtenden Schicht 103, deren Licht zusammen mit dem Beleuchtungslicht der Lichtquelle 101 auf das Objekt 106 gegeben wird, ist die spektrale Zusammensetzung des Beleuchtungslichts insgesamt und somit der Farbeindruck des Objekts steuerbar.

Die in Figur 1 dargestellte Anordnung mit Aperturblende und der wenigstens einen selbstleuchtenden Schicht in der konjugierten Ebene der Lichtquelle stellt insgesamt eine Köhlersche Beleuchtung dar, mit der eine sehr homogene Farbkorrektur über das gesamte Sehfeld zur Verfügung gestellt werden kann.

Eine Anordnung der wenigstens einen selbstleuchtenden Schicht in einer anderen Ebene ist jedoch auch möglich. Insbesondere kann die wenigstens eine selbstleuchtende Schicht 103 beispielsweise auf eine der Linsen 102, 105 bzw. einer Linse der entsprechenden Kollektor- bzw. Kondensoroptik aufgebracht werden.

Vorzugsweise sind zwei oder drei übereinander angeordnete, einzeln ansteuerbare semitransparente Schichten 103, beispielsweise OLED oder TOLED-Schichten, vorgesehen. Die geringe Schärfentiefe der Pupillenabbildung von Mikroskopbeleuchtungssystemen gewährleistet eine Abbildung in dieselbe Objektebene am Objekt 106.

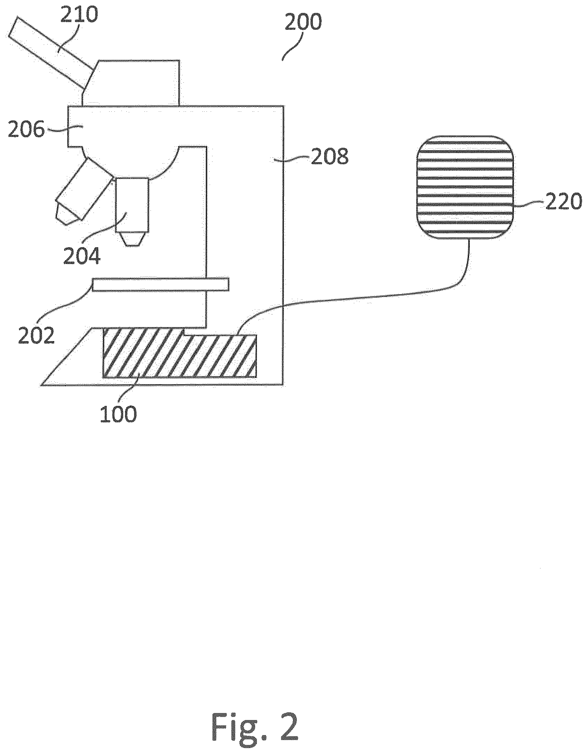

In Figur 2 ist eine erste bevorzugte Ausführungsform eines mit einer erfindungsgemäßen Beleuchtungseinrichtung ausgebildeten Mikroskops insgesamt mit 200 bezeichnet. Wenn im folgenden, d.h. unter Bezugnahme auf die Figuren 2-5, von Mikroskop die Rede ist, sei hiermit auch stets der Begriff Makroskop mit umfasst. Das Mikroskop 200 ist mit einer Durchlicht- Beleuchtungseinrichtung 100 ausgebildet, welche (hier nicht dargestellt) z.B. entsprechende Komponenten 101, 102, 103, 104, 105 zur Durchlichtbeleuchtung eines auf einem Objektträger 202 positionierbaren Objektes aufweist. Weitere Komponenten des Mikroskops 200 sind in Figur 2 ebenfalls rein schematisch dargestellt. Man erkennt beispielsweise mehrere auf einem Objektivrevolver 206 vorgesehene Objektive bzw. Vergrößerungsoptiken 204, ein Mikroskopgehäuse 208 und ein Okular 210.

Das Frequenzspektrum und/oder die Helligkeit, und somit der Farbeindruck des durch die Beleuchtungseinrichtung 200 bereitgestellten Beleuchtungslichts ist mittels eines Steuergeräts 220 steuerbar. Umfasst die Beleuchtungseinrichtung 100 zum Beispiel drei OLED- oder TOLED-Schichten (103), wie oben unter Bezugnahme auf Figur 1 beschrieben, sind diese einzeln bezüglich ihrer Helligkeit bzw. Intensität ansteuerbar, so dass gewünschte Farbkomponenten dem Beleuchtungslicht von der (Haupt-) Lichtquelle 101 beigemischt werden können. Hiermit sind, wie erwähnt, Fertigungsstreuungen von Lichtquellen in einfacher Weise ausgleichbar.

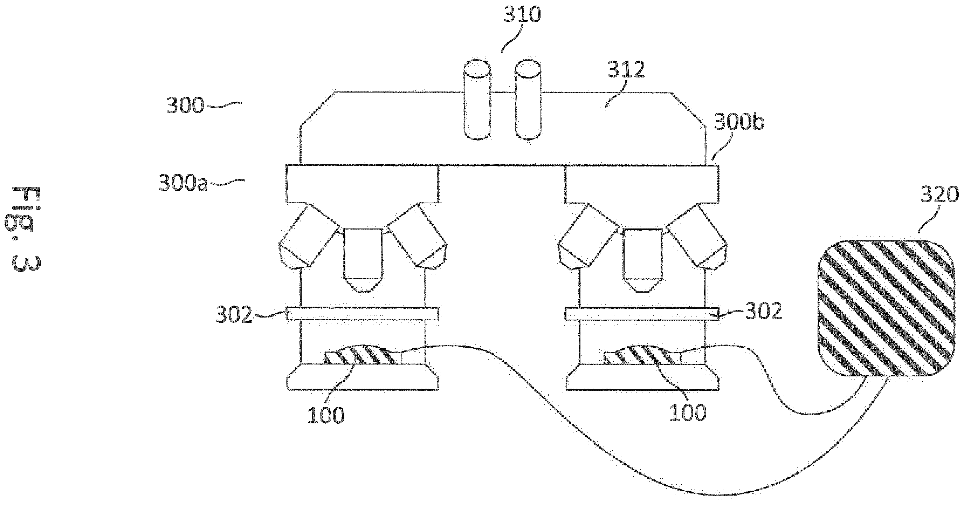

In Figur 3 ist eine weitere bevorzugte Ausführungsform eines Mikroskops, welches mit einer erfindungsgemäßen Beleuchtungseinrichtung ausgebildet ist, insgesamt mit 300 bezeichnet. Das Mikroskop 399 ist als Vergleichsmikroskop ausgebildet, welches zur gleichzeitigen Beobachtung bzw. Analyse von unterschiedlichen Proben dient. Das Vergleichsmikroskop 300 weist zwei Teilmikroskope 300a, 300b auf, welche über eine optische Brücke 312 miteinander verbunden sind. Die somit bereitstellbaren zwei Bildkanäle ermöglichen die Bereitstellung eines unterteilten Sehfeldes, welches durch ein Okular bzw. zwei Okulare 310 beobachtet werden kann.

Jedes der Teilmikroskope 300a, 300bist mit einer erfindungsgemäßen Beleuchtungseinrichtung 100 ausgebildet. Die Einrichtungen 100 sind mittels einer Steuereinrichtung 320 in der bereits beschriebenen Weise individuell steuerbar.

Bei der Vergleichsmikroskopie ist es für einen optimalen Vergleich zweier Proben, welche über die Teilmikroskope 300a, 300b abgebildet werden, wesentlich, dass die Beleuchtungsverhältnisse, das heißt der Beleuchtungseindruck, der beiden Teilmikroskope exakt übereinstimmen. Ein entsprechender Farbabgleich kann beispielsweise durch Einbringung einer Referenzprobe in die jeweiligen Teilmikroskope durchgeführt werde. Bei der beispielsweise in Figur 3 dargestellten Durchlichtbeleuchtung eignen sich hierfür transparente Proben, welche auf die jeweiligen Objekttische 302 aufgebracht werden. Es sei angemerkt, dass im Falle eines Vergleichsmikroskops mit Auflichtbeleuchtung homogene Streuproben zu diesem Zwecke verwendet werden.

Durch Beobachtung der beiden durch die beiden Teilmikroskope bereitgestellten Bildkanäle durch das Okular 310 können die farblichen Komponenten beispielsweise entsprechend einer geeigneten Parametrisierung durch entsprechende Ansteuerung der jeweiligen OLED oder TOLED-Schichten zugemischt werden. Beispielsweise ist es zweckmäßig drei TOLED oder OLED-Schichten zu verwenden, mittels derer eine RGB-Parametrisierung (rot-grün-blau) durchgeführt werden kann. Hiermit kann das Frequenzspektrum und somit der Farbeindruck der beiden Beleuchtungsvorrichtungen optimal aneinander angepasst bzw. angeglichen werden.

Wie erwähnt kann bei Vergleichsmikroskopen oder - makroskopen diese Einstellmöglichkeit separat für jeden Bildkanal vorgesehen sein. Gemäß einfacheren Ausführungsformen ist es auch möglich, lediglich einen der beiden Bildkanäle bzw. eines der beiden Teilmikroskope 300a, 300b mit einer derartigen Beleuchtungseinrichtung mit der Möglichkeit zur farblichen Steuerung von Beleuchtungslicht auszubilden.

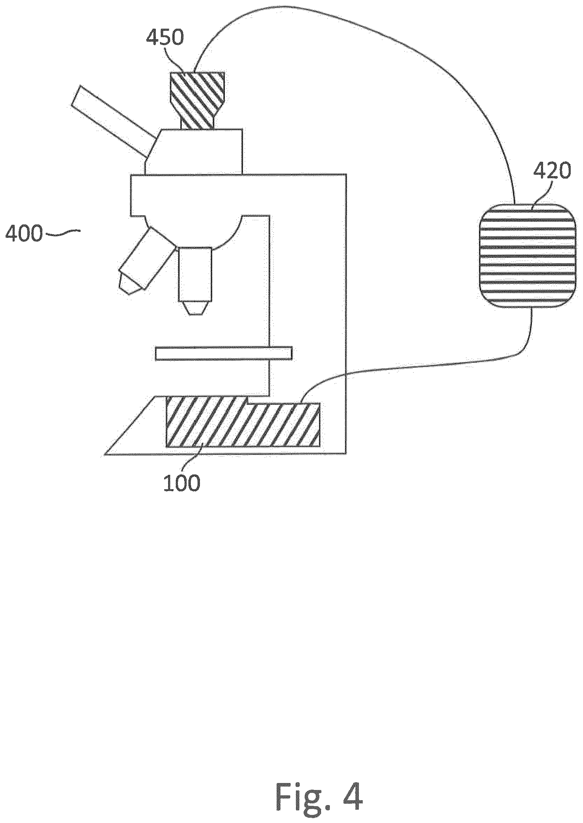

Eine weitere bevorzugte Ausführungsform eines Mikroskops mit einer erfindungsgemäßen Beleuchtungseinrichtung ist in Figur 4 dargestellt und insgesamt mit 400 bezeichnet. Das in Figur 4 dargestellte Mikroskop entspricht dem in Figur 2 dargestellten, wobei zusätzlich eine Digitalkamera 450 vorgesehen ist. Mittels einer derartigen Kamera ist es möglich, unter Verwendung einer erfindungsgemäßen Beleuchtungseinrichtung 400, eine automatisierte Einstellung des Frequenzspektrums bzw. Farbeindrucks der Beleuchtungseinrichtung einzustellen. Hierbei kann beispielsweise mittels des hier mit 420 bezeichneten Steuergerät diese farbliche Korrektur mit Hilfe eines automatischen Algorithmus erfolgen. Dieser kann beispielsweise detektierte Farbwerte einer Referenzprobe auf einen vorab festgelegten Zielwert regulieren.

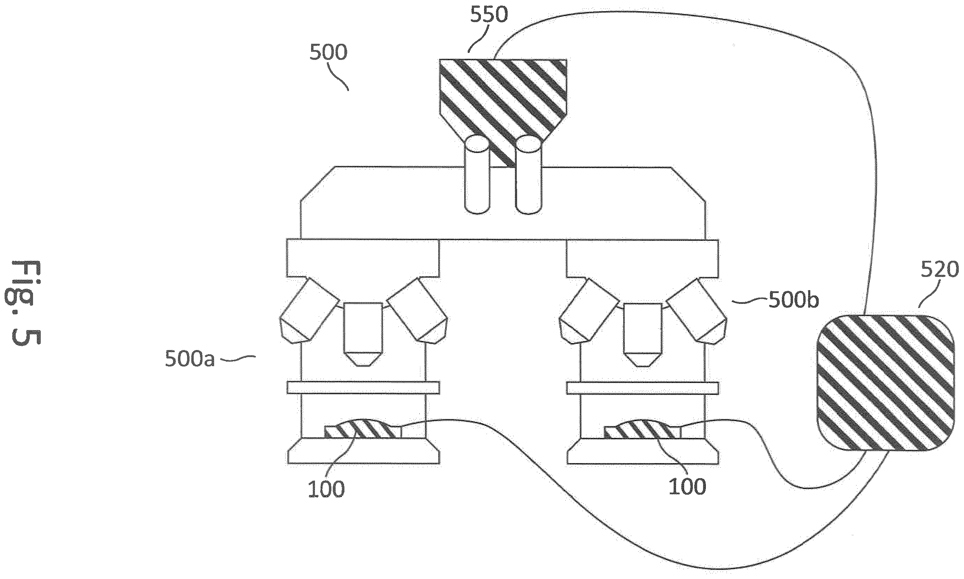

Eine weitere bevorzugte Ausführungsform eines Mikroskops, welches mit einer erfindungsgemäßen Beleuchtungseinrichtung ausgebildet ist, ist in Figur 5 dargestellt und insgesamt mit 500 bezeichnet. Das Mikroskop 500 ist wiederum als Vergleichsmikroskop mit zwei Teilmikroskopen 500a, 500b ausgebildet.

Das Vergleichsmikroskop 500 unterscheidet sich von dem unter Bezugnahme auf Figur 3 dargestellten Vergleichsmikroskop 300 lediglich dadurch, dass eine Digitalkamera 550 vorgesehen ist, mit welcher ein automatischer Farbabgleich der Frequenzspektren bzw. der Beleuchtungseindrücke der erfindungsgemäßen Beleuchtungseinrichtungen 100 durchführbar ist. Auch hier kann, unter Verwendung des Steuergeräts 520, ein automatisierter Farbabgleich der beiden Bildkanäle der Teilmikroskope 500a, 500b erfolgen.

Die dargestellte Erfindung kann sowohl in aufrechten als auch in inversen Mikroskopen integriert werden, sowie in die Beleuchtungsbasis von Stereomikroskopen und -makroskopen integriert werden. Sie eignet sich gleichermaßen für Durchlicht- sowie für Auflichtbeleuchtungen. Wie bereits dargestellt, ist eine Anordnung der wenigstens einen transparenten bzw. semitransparenten selbstleuchtenden Schicht (insbesondere OLED-Schicht) in oder nahe der Aperturebene möglich, wobei es ebenfalls denkbar ist, die Schichten in geeigneten anderen Ebenen eines bestehenden, konventionellen Beleuchtungssystems vorzusehen. Diese Ebenen können eben oder sphärisch, beispielsweise in Form eines Kegelschnitts oder einer Freiformfläche ausgebildet sein. Insbesondere ist es möglich, vorhandene Oberflächen eines bestehenden Beleuchtungssystems, beispielsweise einer Linse oder einer Streuscheibe, als Substrate, auf welche die Schichten aufgebracht, beispielsweise aufgedampft, werden können, zu nutzen. Es ist beispielsweise möglich, in die Ebene 101 ein transparentes Substrat einzubringen, auf welche verschiedene OLED oder TOLED-Schichten aufgebracht werden. Es ist ebenfalls denkbar, diese Schichten z.B. auf der Linse 102 und/oder der Linse 105 aufzubringen.

Die in Figur 6 dargestellte bevorzugte Ausführungsform einer Beleuchtungseinrichtung mit einer Vorrichtung zum Inhomogenitätsausgleich ist insgesamt mit 600 bezeichnet und dient zur Beleuchtung eines Objektes 606. Die Beleuchtungseinrichtung kann beispielsweise für ein (in Figur 6 nicht dargestelltes) Mikroskop oder Makroskop ausgebildet sein.

Die Beleuchtungseinrichtung 600 weist eine Lichtquelle 601, beispielsweise in Form einer Glühlampe oder LED, auf, deren Licht über ein System von Linsen 602, 605 entlang eines Beleuchtungsstrahlengangs 608 zur Beleuchtung des zu untersuchenden Objekts 606 geführt ist. Die Oberfläche des Objektes 606 ist in einer Objektebene 606a angeordnet.

Die Linse 602 ist als Kollektorlinse, und die Linse 605 als Kondensorlinse ausgebildet. Selbstverständlich ist es möglich, an den Positionen dieser Linsen jeweils mehrere Linsen umfassende Kollektor- bzw. Kondensoroptiken vorzusehen. In einer zur Ebene der Lichtquelle 601 konjugierten Ebene 601' ist eine Aperturblende 604 ausgebildet, mittels der die Beleuchtungslichtintensität einstellbar ist.

In einer Zwischenbildebene 603' oder nahe dieser Ebene ist wenigstens eine semitransparente, selbstleuchtende Schicht 603, welche bevorzugt als OLED oder TOLED ausgebildet ist, in den Beleuchtungsstrahlengang 608 eingebracht.

Die wenigstens eine Schicht 603 ist flächig strukturiert ausgebildet, sodass verschiedene Bereiche der Schicht 603 mit verschieden starker Beleuchtungsintensität ausgebildet sein können. Dies ist beispielsweise durch Unterteilung der Schicht 603 in verschiedene (mittels einer Steuereinrichtung) individuell kontaktierte und steuerbare Bereiche möglich. Es ist beispielsweise möglich, einen ersten Bereich der Schicht 603 stärker (beispielsweise mit höherer Spannung) anzusteuern als einen zweiten Bereich, wodurch der erste Bereich entsprechend stärker leuchtet als der zweite. Eine entsprechende Ansteuerelektronik (Steuergerät) ist zur entsprechend individuellen Kontaktierung und Ansteuerung dieser einzelnen Bereiche ausgebildet. Durch diese selektive Ansteuerung kann dem Beleuchtungslicht von der (Haupt-)Lichtquelle 601 selektiv räumlich strukturiert und mit entsprechender Helligkeit weiteres Licht zugemischt werden. Durch die Anordnung der wenigstens einen Schicht 603 in der Zwischenbildebene wird erreicht, dass die Leuchtstruktur der selbstleuchtenden Schicht 603 auf die Objektebene 606a abgebildet wird. die Transparenz oder Semitransparenz der wenigstens einen Schicht 603 gewährleistet gleichzeitig eine Transmission des Beleuchtungslichts der (Haupt-) Lichtquelle 601.

Es ist insbesondere möglich, die Schicht 603 als einzige Schicht, welche ein zusätzliches weißes Beleuchtungslicht zur Verfügung stellt, auszubilden. Derartige weißes Licht emmitirenden OLEDs bzw. TOLEDs sind kommerziell verfügbar.

Aufgrund der geringen Schärfentiefe von Mikroskopbeleuchtungssystemen ist es jedoch ebenfalls möglich, ein zusätzliches weißes Beleuchtungslicht durch Übereinanderanordnung von farblich unterschiedlichen Schichten 603, insbesondere OLED- oder TOLED-Schichten bereitzustellen. Beispielsweise können derartige übereinander vorgesehene Schichten einen RGB-Farbraum (rot-grün-blau) aufspannen. Zweckmäßigerweise sind die einzeln ansteuerbaren Bereiche der jeweiligen Schichten einander zugeordnet, also insbesondere jeweils übereinander angeordnet.

Mittels einer derartigen räumlichen Strukturierung der wenigstens einen Schicht 603 kann insbesondere eine bei herkömmlichen Systemen oft anzutreffende inhomogene Ausleuchtung eines Sehfeldes, welche zum Sehfeldrand hin abnimmt, wirksam kompensiert werden. Die räumliche bzw. flächige Strukturierung der wenigstens einen Schicht kann daher insbesondere rotationssymmetrisch um die optische Achse der Beleuchtungsoptik ausgebildet sein.

Gemäß weiteren Ausgestaltungen ist es jedoch auch möglich eine aus einzelnen z. B. viereckigen, rechteckigen, oder kreisförmigen Bereichen (Pixeln) bestehende Strukturierung oder auch eine in anderer Weise segmentierte Strukturierung vorzusehen.

Eine Anordnung der wenigstens einen selbstleuchtenden Schicht in einer anderen Ebene als der Zwischenbildebene 603' ist jedoch auch möglich. Insbesondere kann die wenigstens eine selbstleuchtende Schicht 603 beispielsweise auf eine der Linsen 602, 605 bzw. einer Linse der entsprechenden Kollektor- bzw. Kondensoroptik aufgebracht werden.

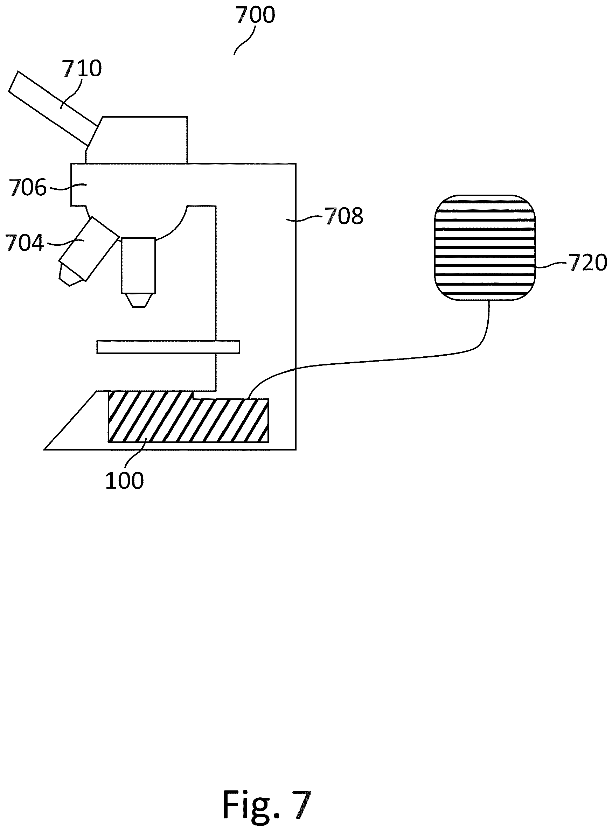

In Figur 7 ist eine erste bevorzugte Ausführungsform eines mit einer erfindungsgemäßen Beleuchtungseinrichtung ausgebildeten Mikroskops insgesamt mit 700 bezeichnet. Wenn im folgenden, d.h. unter Bezugnahme auf die Figuren 7-9, von Mikroskop die Rede ist, sei hiermit auch stets der Begriff Makroskop mit umfasst. Das Mikroskop 700 ist mit einer Durchlicht- Beleuchtungseinrichtung 600 ausgebildet, welche (hier nicht dargestellt) z.B. entsprechende Komponenten 601, 602, 603, 604, 605 zur Durchlichtbeleuchtung eines auf einem Objektträger 702 positionierbaren Objektes aufweist. Weitere Komponenten des Mikroskops 700 sind in Figur 7 ebenfalls rein schematisch dargestellt. Man erkennt beispielsweise mehrere auf einem Objektivrevolver 706 vorgesehene Objektive bzw. Vergrößerungsoptiken 704, ein Mikroskopgehäuse 708 und ein Okular 710. Es sei bemerkt, dass die Darstellung eines Mikroskops mit Durchlichtbeleuchtung rein beispielhaft erfolgt. Die vorliegende Erfindung ist in gleicher Weise im Zusammenhang mit einer Auflichtbeleuchtung einsetzbar.

Die Helligkeit des durch die Beleuchtungseinrichtung 700 bereitgestellten Beleuchtungslichts ist mittels eines Steuergeräts 720 steuerbar. Umfasst die Beleuchtungseinrichtung 600 zum Beispiel eine selektiv ansteuerbare OLED oder TOLED-Schicht 603, wie oben unter Bezugnahme auf Figur 6 beschrieben, sind einzelne Bereiche dieser OLED oder TOLED individuell ansteuerbar, so dass Licht mit einer gewünschten Intensität den jeweiligen individuell ansteuerbaren Bereichen des Sehfeldes dem Beleuchtungslicht von der (Haupt-) Lichtquelle 601 beigemischt werden kann.

Beispielsweise durch Einbringen einer Referenzprobe (für Durchsichtanordnungen, wie in Figur 7 dargestellt, in der Regel eine transparente Probe, für Auflichtanordnungen typischer Weise eine homogen streuende Fläche) ist es einem Benutzer des Mikroskops durch geeignete Ansteuerung des Beleuchtungseinrichtung 600 durch Betätigung des Steuergeräts 720 möglich, eine gewünschte Homogenisierung der Feldausleuchtung zu erzielen. Hierzu kann beispielsweise das Sehfeld geeignet parametrisiert werden, wobei hier insbesondere eine radiale Verteilung mittels Splines oder über Zernike-Polynome verwendet werden kann.

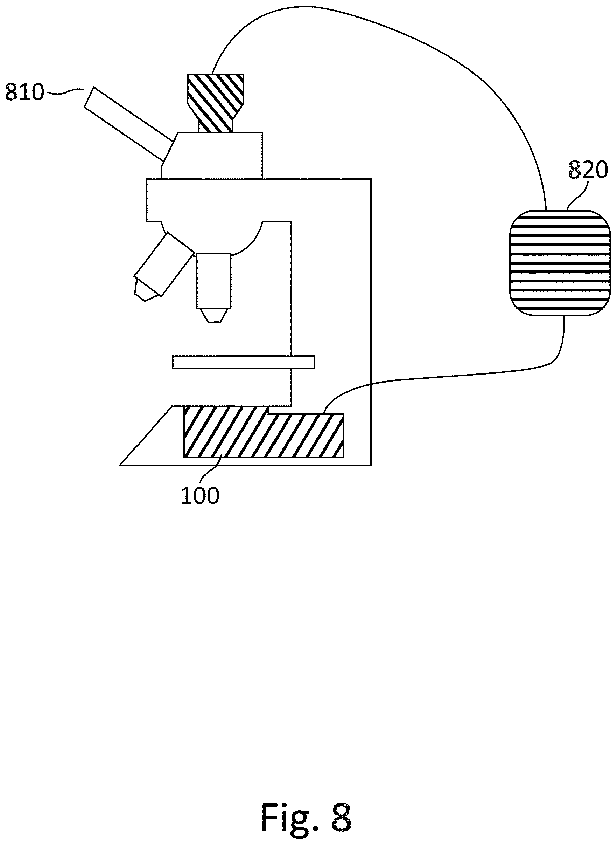

Eine weitere bevorzugte Ausführungsform eines Mikroskops mit einer erfindungsgemäßen Beleuchtungseinrichtung ist in Figur 8 dargestellt und insgesamt mit 800 bezeichnet. Das in Figur 8 dargestellte Mikroskop entspricht dem in Figur 7 dargestellten, wobei zusätzlich eine Digitalkamera 850 vorgesehen ist. Mittels einer derartigen Kamera ist es möglich, unter Verwendung einer erfindungsgemäßen Beleuchtungseinrichtung 600, eine automatisierte Einstellung der Helligkeit der Beleuchtungseinrichtung selektiv über das Sehfeld einzustellen. Hierbei kann beispielsweise mittels des hier mit 820 bezeichneten Steuergeräts diese Helligkeitseinstellung mit Hilfe eines automatisch durchgeführten Algorithmus erfolgen. Dieser kann beispielsweise detektierte Helligkeitswerte einer Referenzprobe auf einen vorab festgelegten Zielwert regulieren.

Beispielsweise durch Aufnahme des Mikroskopbilds mit der Kamera 850 ist es möglich, eine automatisierte Beleuchtungshomogenisierung zu implementieren. Durch Berechnung der Abweichung der Helligkeit einzelner Bildbereiche beispielsweise zum Helligkeitsmaximum des Bildes lässt sich ortsaufgelöst die jeweilige örtliche Helligkeit errechnen, die durch die selbstleuchtende Schicht in jeweiligen Bereichen zuzumischen ist. Die hierbei errechnete optimale Darstellung dieses Zumischmusters wird dann durch die selektiv ansteuerbare Schicht 603 zur Verfügung gestellt, wobei Abbildungseigenschaften der Beleuchtungsoptik berücksichtigt werden können. Diese automatische Beleuchtungskorrektur kann über ein direktes oder ein iteratives Verfahren erfolgen. Die errechnete Beleuchtungskorrektur kann für die jeweilige Beleuchtungssituation (beispielsweise abhängig von Einstellungen der Lichtquelle 601 oder eines benutzten Objektivs) in einer Voreinstellung zur späteren Wiederverwendung abgespeichert werden.

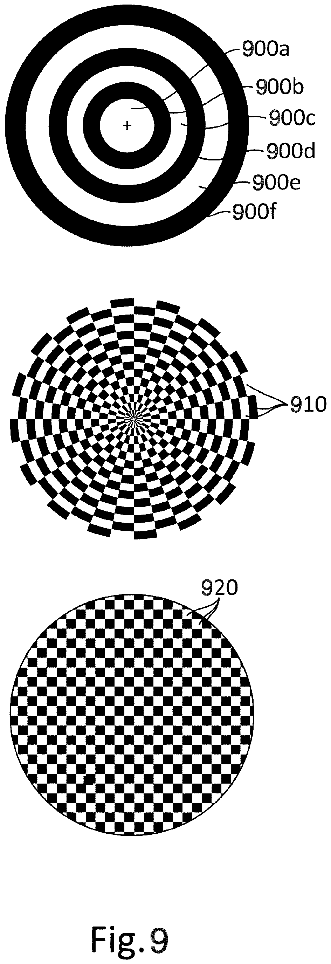

Verschiedene Beispiele für eine räumliche Strukturierung der wenigstens einen Schicht 603 (insbesondere OLED oder TOLED) sind in Figur 9 dargestellt.

In Figur 9, oben, ist eine konzentrische Ringstruktur implementiert, wobei die jeweiligen Bereiche 900a bis 900f einzeln ansteuerbar sind. Die Darstellung mit dunklen und hellen Bereichen erfolgt lediglich zur Veranschaulichung der einzeln ansteuerbaren ringförmigen Bereiche bzw. des kreisförmigen mittleren Bereiches.

In Figur 9, Mitte, ist eine weitere Unterteilung dieser ringförmigen Bereiche in einzelne Bereiche bzw. Segmente 910 bereitgestellt. Mit einer selektiven Ansteuerbarkeit der einzelnen Segmente ist eine noch feinere Anpassung an eine gewünschte Leuchtfeldhomogenität bereitstellbar.

In Figur 9b, unten, ist eine weitere mögliche Gestaltungsmöglichkeit für individuell ansteuerbare Bereiche der wenigstens einen Schicht 603 dargestellt, wobei hier selektiv ansteuerbare Quadrate 920 in einem kartesischen Muster vorgesehen sind.

Die dargestellte Erfindung kann sowohl in aufrechten als auch in inversen Mikroskopen integriert werden, sowie in die Beleuchtungsbasis von Stereomikroskopen und -makroskopen integriert werden. Sie eignet sich gleichermaßen für Durchlicht- sowie für Auflichtbeleuchtungen. Wie bereits dargestellt, ist eine Anordnung der wenigstens einen transparenten bzw. semitransparenten selbstleuchtenden Schicht (insbesondere OLED-Schicht) in oder nahe der Zwischenbildebene möglich, wobei es ebenfalls denkbar ist, die Schichten in geeigneten anderen Ebenen eines bestehenden, konventionellen Beleuchtungssystems vorzusehen. Diese Ebenen können eben oder sphärisch, beispielsweise in Form eines Kegelschnitts oder einer Freiformfläche ausgebildet sein. Insbesondere ist es möglich, vorhandene Oberflächen eines bestehenden Beleuchtungssystems, beispielsweise einer Linse oder einer Streuscheibe, als Substrate, auf welche die Schichten aufgebracht, beispielsweise aufgedampft, werden können, zu nutzen. Es ist beispielsweise möglich, in die Zwischenbildebene 601 ein transparentes Substrat einzubringen, auf welche verschiedene OLED oder TOLED-Schichten aufgebracht werden. Es ist ebenfalls denkbar, diese Schichten z.B. auf der Linse 602 und/oder der Linse 605 aufzubringen.

Die erfindungsgemäße Beleuchtungseinrichtung kann ferner in die Beleuchtungsbasis eines Stereomikroskops oder eines Makroskops integriert werden, hier vorzugsweise nahe der Objektebene 606a.

Es ist insbesondere auch möglich, der wenigstens einen Schicht eine Streuscheibe nachzuschalten, um eine Sichtbarkeit der Strukturen in der Objektebene vermeiden zu können.

### Bezugszeichenliste

- 100: Beleuchtungseinrichtung
- 101: Lichtquelle
- 101': Konjugierte Ebene ((Aperturebene)
- 102: Linse (Kollektorlinse)
- 103: selbstleuchtende Schicht
- 104: Aperturblende
- 105: Linse (Kondensorlinse)
- 106: Objekt
- 106': Objektebene
- 108: Beleuchtungsstrahlengang
- 200, 300, 400, 500: Mikroskop
- 202: Objektträger
- 204: Objektive
- 206: Objektivrevolver
- 208: Mikroskopgehäuse
- 210: Okular
- 220, 320, 420, 520: Steuergerät
- 300a, 300b: Teilmikroskope
- 310: Okular
- 312: optische Brücke
- 450, 550: Kamera
- 500a, 500b: Teilmikroskope
- 600: Beleuchtungseinrichtung
- 601: Lichtquelle
- 601': Konjugierte Ebene ((Aperturebene)
- 602: Linse (Kollektorlinse)
- 603: selbstleuchtende Schicht
- 603': Zwischenbildebene
- 604: Aperturblende
- 605: Linse (Kondensorlinse)
- 606: Objekt/Objektebene
- 606': Objektebene
- 608: Beleuchtungsstrahlengang
- 700, 800: Mikroskop
- 702: Objektträger
- 704: Objektive
- 706: Objektivrevolver
- 708: Mikroskopgehäuse
- 710: Okular
- 720, 820: Steuergerät
- 810: Okular
- 850: Kamera
- 900a-900f: Bereiche der selbstleuchtenden Schicht
- 910: Bereiche (Segemente) der selbstleuchtenden Schicht
- 920: Bereiche (Quadrate) der selbstleuchtenden Schicht

## Patentansprüche

1. Beleuchtungseinrichtung (100, 600) für ein Mikroskop oder für ein Makroskop (200, 300, 400, 500, 700, 800) umfassend eine erste Beleuchtungsquelle und ein System von Linsen, wobei von der ersten Beleuchtungsquelle (101, 601) emittiertes Licht über das System von Linsen (102, 105), die als eine mindestens eine Kollektorlinse (102) umfassende Kollektoroptik und eine mindestens eine Kondensorlinse (105) umfassende Kondensoroptik ausgebildet sind, entlang eines Beleuchtungsstrahlengangs auf ein in einer Objektebene (106', 606') angeordnetes zu beleuchtendes Objekt (106, 606) gegeben wird,
**gekennzeichnet durch** wenigstens eine in dem Beleuchtungsstrahlengang positionierbare zweite Beleuchtungsquelle (103, 603), welche transparent oder semitransparent sowie selbstleuchtend ausgebildet ist, und von der ersten Beleuchtungsquelle (101, 601) emittiertes Licht wenigstens teilweise durchlässt, wobei die Objektebene (106', 606') mit dem zu beleuchtenden Objekt (106, 606) sowohl von der ersten als auch von der zweiten Beleuchtungsquelle beleuchtet wird und wobei die zweite Beleuchtungsquelle mit einer Anzahl von einzeln ansteuerbaren Bereichen (900a-900f, 910, 920) zur Bereitstellung einer positionsabhängigen Beleuchtungskorrektur ausgebildet ist, wobei die wenigstens eine zweite Beleuchtungsquelle (103, 603) in der Aperturebene (101', 601') oder in einer Zwischenbildebene (103', 603') des Beleuchtungsstrahlengangs oder in der Nähe der Aperturebene (101', 601') oder auf einer der Linsen der entsprechenden Kollektoroptik bzw. Kondensoroptik angeordnet ist.

2. Beleuchtungseinrichtung nach Anspruch 1, **dadurch gekennzeichnet, dass** die wenigstens eine zweite Beleuchtungsquelle als selbstleuchtende Schicht (103, 603) ausgebildet ist.

3. Beleuchtungseinrichtung nach Anspruch 1 oder 2, **dadurch gekennzeichnet, dass** die wenigstens eine zweite Beleuchtungsquelle (103, 603) als Elektrolumineszenzschicht ausgebildet ist.

4. Beleuchtungseinrichtung nach einem der vorangehenden Ansprüche, **dadurch gekennzeichnet, dass** die wenigstens eine zweite Beleuchtungsquelle (103, 603) als OLED oder als TOLED ausgebildet ist.

5. Beleuchtungseinrichtung nach einem der vorangehenden Ansprüche, **dadurch gekennzeichnet, dass** die wenigstens eine zweite Beleuchtungsquelle (103, 603) als Ebene oder gekrümmte Oberfläche ausgebildet ist, wobei die wenigstens eine zweite Beleuchtungsquelle (103, 603) insbesondere auf die Oberfläche eines im Beleuchtungsstrahlengang vorgesehenen optischen Elements (102, 105, 602, 605) aufgebracht ist.

6. Beleuchtungseinrichtung nach Anspruch1, **dadurch gekennzeichnet, dass** Mittel zur individuellen elektrischen Ansteuerung der einzeln ansteuerbaren Bereiche (900a-900f, 910, 920) der wenigstens einen selbstleuchtenden Schicht (103, 603) vorgesehen sind.

7. Beleuchtungseinrichtung nach Anspruch 1, **dadurch gekennzeichnet, dass** die zweite Beleuchtungsquelle (103) in einer Aperturebene (101', 601') oder in der Nähe der Aperturebene (101', 601') ausgebildet ist und zur Anpassung der von der Beleuchtungseinrichtung bereitgestellten Farbtemperatur eingerichtet ist.

8. Beleuchtungseinrichtung nach Anspruch 1, **dadurch gekennzeichnet, dass** die zweite Beleuchtungsquelle (603) in einer Zwischenbildebene (103', 603') oder in der Nähe der Zwischenbildebene (103', 603') ausgebildet ist und zum Ausgleich von Inhomogenitäten in der von der Beleuchtungseinrichtung bereitgestellten Helligkeitsverteilung eingerichtet ist.

9. Mikroskop oder Makroskop mit einer Beleuchtungseinrichtung nach einem der vorstehenden Ansprüche.

10. Mikroskop oder Makroskop nach Anspruch 9, **dadurch gekennzeichnet, dass** es als Vergleichsmikroskop (300, 500) mit wenigstens zwei Teilmikroskopen (300a, 300b; 500a, 500b) ausgebildet ist, wobei wenigstens ein Teilmikroskop oder sämtliche Teilmikroskope, mit einer Beleuchtungseinrichtung nach einem der vorstehenden Ansprüche ausgebildet ist bzw. sind.

## Claims

1. Illumination device (100, 600) for a microscope or for a macroscope (200, 300, 400, 500, 700, 800), comprising a first illumination source and a system of lenses, wherein light emitted by the first illumination source (101, 601) is cast on an object (106, 606), which is intended to be illuminated and disposed in an object plane (106', 606'), via the system of lenses (102, 105), which is embodied as a collector optical unit comprising at least one collector lens (102) and as a condenser optical unit comprising at least one condenser lens (105), and along an illumination beam path,
**characterized by** at least one second illumination source (103, 603) which is positionable in the illumination beam path, which has a transparent or semi-transparent and self-luminous embodiment and which at least partly passes light emitted by the first illumination source (101, 601),
wherein the object plane (106', 66') with the object (106, 606) to be illuminated is illuminated both by the first and by the second illumination source and wherein the second illumination source is embodied with a number of individually driveable regions (900a-900f, 910, 920) for providing a position-dependent illumination correction,
wherein the at least one second illumination source (103, 603) is disposed in the aperture plane (101', 601') or in an intermediate image plane (103', 603') of the illumination beam path or in the vicinity of the aperture plane (101', 601') or on one of the lenses of the corresponding collector optical unit or condenser optical unit.

2. Illumination device according to Claim 1, **characterized in that** the at least one second illumination source is embodied as a self-luminous layer (103, 603).

3. Illumination device according to Claim 1 or 2, **characterized in that** the at least one second illumination source (103, 603) is embodied as an electroluminescent layer.

4. Illumination device according to any one of the preceding claims, **characterized in that** the at least one second illumination source (103, 603) is embodied as an OLED or TOLED.

5. Illumination device according to any one of the preceding claims, **characterized in that** the at least one second illumination source (103, 603) is embodied as a plane or a curved surface, wherein the at least one second illumination source (103, 603) more particularly is applied to the surface of an optical element (102, 105, 602, 605) provided in the illumination beam path.

6. Illumination device according to Claim 1, **characterized in that** means for individually electrically driving the individually driveable regions (900a-900f, 910, 920) of the at least one self-luminous layer (103, 603) are provided.

7. Illumination device according to Claim 1, **characterized in that** the second illumination source (103) is formed in an aperture plane (101', 601') or in the vicinity of the aperture plane (101', 601') and configured to adapt the colour temperature provided by the illumination device.

8. Illumination device according to Claim 1, **characterized in that** the second illumination source (603) is formed in an intermediate image plane (103', 603') or in the vicinity of the intermediate image plane (103', 603') and configured to compensate inhomogeneities in the brightness distribution provided by the illumination device.

9. Microscope or macroscope having an illumination device according to any one of the preceding claims.

10. Microscope or macroscope according to Claim 9, **characterized in that** it is embodied as a comparison microscope (300, 500) with at least two partial microscopes (300a, 300b; 500a, 500b), wherein at least one partial microscope or all partial microscopes is or are embodied with an illumination device according to any one of the preceding claims.

## Revendications

1. Dispositif d'éclairage (100, 600) destiné à un microscope ou à un macroscope (200, 300, 400, 500, 700, 800), comprenant une première source d'éclairage et un système de lentilles, dans lequel une lumière émise par la première source d'éclairage (101, 601) est amenée à passer par le système de lentilles (102, 105), qui sont réalisées sous la forme d'une optique collectrice comprenant au moins une lentille collectrice (102) et sous la forme d'une optique condensatrice comprenant au moins une lentille condensatrice (105), suivant une trajectoire de faisceau d'éclairage sur un objet (106, 606) à éclairer, disposé dans un plan d'objet (106', 606'), **caractérisé par** au moins une deuxième source d'éclairage (103, 603) pouvant être positionnée sur la trajectoire de faisceau d'éclairage et qui est réalisée de manière transparente ou semi-transparente ainsi que luminescente et qui laisse passer au moins en partie une lumière émise par la première source d'éclairage (101, 601), dans lequel le plan d'objet (106', 606') avec l'objet à éclairer (106, 606) est éclairé à la fois par la première et par la deuxième source d'éclairage, et dans lequel la deuxième source d'éclairage est réalisée avec un certain nombre de zones (900a à 900f, 910, 920) pouvant être excitées individuellement pour fournir une correction d'éclairage en fonction de la position, dans lequel ladite au moins une deuxième source d'éclairage (103, 603) est disposée dans le plan d'ouverture (101', 601') ou dans un plan d'image intermédiaire (103', 603') de la trajectoire de faisceau d'éclairage ou à proximité du plan d'ouverture (101', 601') ou sur l'une des lentilles de l'optique collectrice ou de l'optique condensatrice correspondante.

2. Dispositif d'éclairage selon la revendication 1, **caractérisé en ce que** ladite au moins une deuxième source d'éclairage est réalisée comme une couche luminescente (103, 603).

3. Dispositif d'éclairage selon la revendication 1 ou 2, **caractérisé en ce que** ladite au moins une deuxième source d'éclairage (103, 603) est réalisée comme une couche électroluminescente.

4. Dispositif d'éclairage selon l'une quelconque des revendications précédentes, **caractérisé en ce que** ladite au moins une deuxième source d'éclairage (103, 603) est réalisée comme une OLED ou une TOLED.

5. Dispositif d'éclairage selon l'une quelconque des revendications précédentes, **caractérisé en ce que** ladite au moins une deuxième source d'éclairage (103, 603) est réalisée sous la forme d'un plan ou d'une surface courbe, ladite au moins une deuxième source d'éclairage (103, 603) étant appliquée en particulier à la surface d'un élément optique (102, 105, 602, 605) prévu sur la trajectoire de faisceau d'éclairage.

6. Dispositif d'éclairage selon la revendication 1, **caractérisé en ce que** des moyens sont prévus pour l'excitation électrique individuelle des zones (900a à 900f, 910, 920) pouvant être excitées individuellement de ladite au moins une couche luminescente (103, 603).

7. Dispositif d'éclairage selon la revendication 1, **caractérisé en ce que** la deuxième source d'éclairage (103) est réalisée dans un plan d'ouverture (101', 601') ou à proximité du plan d'ouverture (101', 601') et est aménagée pour adapter la température de couleur fournie par le dispositif d'éclairage.

8. Dispositif d'éclairage selon la revendication 1, **caractérisé en ce que** la deuxième source d'éclairage (603) est réalisée dans un plan d'image intermédiaire (103', 603') ou à proximité du plan d'image intermédiaire (103', 603') et est aménagée pour compenser des inhomogénéités de la distribution lumineuse fournie par le dispositif d'éclairage.

9. Microscope ou macroscope, comprenant un dispositif d'éclairage selon l'une quelconque des revendications précédentes.

10. Microscope ou macroscope selon la revendication 9, **caractérisé en ce qu'**il est réalisé sous la forme d'un microscope comparateur (300, 500) comprenant au moins deux microscopes partiels (300a, 300b ; 500a, 500b), au moins un microscope partiel ou tous les microscopes partiels étant réalisé(s) avec un dispositif d'éclairage selon l'une quelconque des revendications précédentes.
